# EUROPÄISCHE PATENTSCHRIFT

(11) **EP 4 248 289 B1**
(45) Veröffentlichungstag und Bekanntmachung des Hinweises auf die Patenterteilung: **11.09.2024**
(21) Anmeldenummer: 21799201.5
(22) Anmeldetag: 18.10.2021
(51) Int. Cl.: G05D 1/00

(54) **VERFAHREN ZUR POSITIONSVERÄNDERUNG VON AUF EINER LADEGUTAUFNAHME EINES FAHRERLOSEN TRANSPORTFAHRZEUGES BEFINDLICHEM LADEGUT**
METHOD FOR CHANGING THE POSITION OF CARGO LOCATED ON A CARGO RECEPTACLE OF A DRIVERLESS TRANSPORT VEHICLE
PROCÉDÉ DE MODIFICATION DE LA POSITION D'UNE CARGAISON SITUÉE SUR UN CONTENEUR DE FRET D'UN VÉHICULE DE TRANSPORT SANS CONDUCTEUR

(30) Priorität: 18.11.2020 DE 102020130439
(43) Veröffentlichungstag der Anmeldung: 27.09.2023
(73) Patentinhaber: Fraunhofer-Gesellschaft zur Förderung der angewandten Forschung e.V., 80686 München (DE)
(72) Erfinder: EMMERICH, Jan Sören, 80686 München (DE); HÖNING, Dirk, 80686 München (DE); KLOKOWSKI, Patrick, 80686 München (DE); HAMMERMEISTER, Christian, 80686 München (DE); TEN HOMPEL, Michael, 80686 München (DE); BEHLING, Jan, 80686 München (DE); ROTGERI, Mathias, 80686 München (DE)
(74) Vertreter: Meinke, Jochen
(86) Internationale Anmeldenummer: PCT/EP2021/078788
(87) Internationale Veröffentlichungsnummer: WO 2022/106130

(56) Entgegenhaltungen:
- EP-A1- 3 699 066
- DE-A1- 10 215 033
- DE-A1- 19 827 881

## Beschreibung

Die Erfindung betrifft ein Verfahren zur Positionsveränderung von auf einer Ladegutaufnahme eines Fahrerlosen Transportfahrzeuges befindlichem Ladegut, wobei der Fahrantrieb des Transportfahrzeuges von einer Fahrzeugsteuerung gesteuert wird.

Fahrerlose Transportfahrzeuge zum Transport von Ladegut werden vor allem im Bereich der Logistik vielfältig eingesetzt. Dabei werden vorzugsweise automatische Fahrerlose Transportfahrzeuge verwendet, die von einer Fahrzeugsteuerung gesteuert werden. Für bestimmte Funktionen, wie Lastabgabe, Verhinderung des Herunterfallens des Ladegutes beim Bremsen, Beschleunigung, Kurvenfahrt, Interaktion mit anderen Maschinen, ist eine exakte Positionierung des Ladegutes an einer vorgegebenen Ladegut-Soll-Position der Ladegutaufnahme wichtig.

Eine Positionierung des Ladegutes auf der Ladegutaufnahme eines Transportfahrzeuges kann auf unterschiedliche Weise durchgeführt werden. So kann das Ladegut gezielt mit Hilfe eines Werkzeuges oder Roboters positioniert werden. Das Ladegut kann auch mit form- und/oder kraftschlüssigen Elementen an der Ladegutaufnahme fixiert werden. Es können auch aktive (z.B. Pusher) oder passive (z.B. Abstreifer) Elemente eingesetzt werden, die die Ladegutposition verändern. Ferner kann das Ladegut sehr präzise von einem Stetigförderer auf ein vorbeifahrendes Element (z.B. Ladeschale bei einem automatischen Sortierer für Pakete) mit einer abgestimmten Geschwindigkeit abgegeben werden.

Wenn keine exakte Positionierung des Ladegutes auf der Ladegutaufnahme des Transportfahrzeuges hergestellt werden kann, müssen diese Ungenauigkeiten bei anderen Gewerken berücksichtigt werden (z.B. Erkennung der Ladegutposition vor der Ladegutabgabe), was entsprechend aufwendig ist.

Aus DE 20 2020 000 762 U1 und EP 3 699 066 A1 sind Verfahren zur Positionsveränderung von auf einer Ladegutaufnahme eines Fahrerlosen Transportfahrzeuges befindlichem Ladegut bekannt.

Aufgabe der Erfindung ist es, eine Lösung für Fahrerlose Transportfahrzeugen zu schaffen, bei der die Positionierung des Ladegutes auf dem Transportfahrzeug durch das Transportfahrzeug selbst erfolgt, ohne dass dazu zusätzliche Positionierelemente am Transportfahrzeug oder an der Ladegutübernahmestation notwendig sind.

Diese Aufgabe wird bei einem Verfahren der eingangs bezeichneten Art erfindungsgemäß dadurch gelöst, dass die Ladegut-Ist-Position von einer mit der Steuerung verbundenen Detektionseinrichtung erfasst wird und von der Fahrzeugsteuerung aus der Ladegut-Ist-Position ein Ladegut-Positionskorrekturvektor zu einer Ladegut-Soll-Position auf der Ladegutaufnahme ermittelt wird und die Fahrzeugsteuerung den Fahrantrieb so steuert, dass das Transportfahrzeug im Wesentlichen in zum Ladegut-Positionskorrekturvektor entgegengesetzter Richtung beschleunigt wird, damit das Ladegut die Ladegut-Soll-Position auf der Ladegutaufnahme erreicht.

Mit einem solchen Verfahren ist es möglich, ein Ladegut auf einer Ladegutaufnahme eines Fahrerlosen Transportfahrzeuges ohne zusätzliche Positionierelemente in der gewünschten Soll-Position anzuordnen, indem durch gezielte ein- oder mehrmalige Fahrzeugbeschleunigung entgegen der Verschieberichtung von der Ist-Position zur Soll-Position das Ladegut nach Überwindung der Reibungskraft durch die wirkende Massenträgheitskraft auf der Ladegutaufnahme in die Sollposition rutscht. In Abhängigkeit von den jeweiligen Umständen (z.B. notwendiger Verschiebeweg, Reibung) kann dazu bereits eine einmalige kurze Fahrzeugbeschleunigung ausreichen. In vielen Anwendungsfällen ist keine völlig exakte Positionierung des Ladegutes erforderlich, sondern es reicht bereits aus, dass sich das Ladegut nicht im Randbereich der Ladegutaufnahme und damit in einem Ladegut-Soll-Bereich befindet oder die Ladegutaufnahme teilweise nach außen überragt. In diesen Fällen sind die Anforderungen an die Messgenauigkeit der Detektionseinrichtung nicht sehr hoch, die Ladegut-Ist-Position muss dann nicht exakt erfasst werden. Bevorzugt weist das Transportfahrzeug einen omnidirektionalen Fahrantrieb auf, mit dem ruckweise Beschleunigungen unabhängig von der momentan gefahrenen Trajektorie in alle Richtungen - und damit auch entgegen aller notwendigen Ladegut-Positionskorrekturvektoren - durchgeführt werden können.

Dabei kann vorgesehen sein, dass die Ladegut-Ist-Position kontinuierlich von der Detektionseinrichtung erfasst und von der Fahrzeugsteuerung berücksichtigt wird. Diese Verfahrensführung ist vor allem dann vorgesehen, wenn eine mehrmalige Fahrzeugbeschleunigung zur Ladegutverschiebung erforderlich ist.

Vorteilhaft ist vorgesehen, dass vor der Beschleunigung des Transportfahrzeuges in im Wesentlichen zum Ladegut-Positionskorrekturvektor entgegengesetzter Richtung der Reibwert der Oberfläche der Ladegutaufnahme verändert wird. Während einer normalen Fahrt des Fahrzeuges ist die Kontaktfläche der Ladegutaufnahme zum Ladegut dann so eingestellt, dass das Ladegut sicher auf der Ladegutaufnahme verbleibt. Vor der Fahrzeugbeschleunigung zur Positionsveränderung des Ladegutes wird der Reibwert verringert, so dass das Ladegut leichter in die Soll-Position rutschen kann. Die Fahrzeugbeschleunigung kann dementsprechend geringer sein, so dass das Transportfahrzeug weniger von seiner eigentlichen Fahrroute abweicht.

Nach einer ersten Ausgestaltung ist vorgesehen, dass die Detektionseinrichtung stationär und räumlich getrennt vom Transportfahrzeug angeordnet ist. Die Detektionseinrichtung ist dann natürlich derart im Fahrweg des Transportfahrzeuges angeordnet, dass sie das Ladegut erfassen kann.

Nach einer zweiten Ausgestaltung ist vorgesehen, dass die Detektionseinrichtung mit dem Transportfahrzeug verbunden ist.

Das Fahrerlose Transportfahrzeug kann sich nach einer vorgegebenen Trajektorie bewegen. In diesem Fall sind zwei Verfahrensvarianten möglich.

Nach einer ersten Variante ist vorgesehen, dass die Fahrzeugsteuerung den Fahrantrieb so steuert, dass das Transportfahrzeug sich auf einer Trajektorie mit vorgegebenen Trajektorie-Soll-Positionen von einem Trajektorieanfangspunkt zu einem Trajektorieendpunkt bewegt, und dass während der Bewegung des Fahrzeuges auf der Trajektorie die Beschleunigung des Transportfahrzeuges zur Positionsveränderung des Ladegutes durchgeführt wird, wodurch die Fahrzeug-Ist-Position von der Trajektorie-Soll-Position abweicht, und dass nach Abschluss der Beschleunigung des Transportfahrzeuges die Fahrzeugsteuerung die verbleibende Trajektorie zum Trajektorieendpunkt neu ermittelt und den Fahrantrieb so steuert, dass das Transportfahrzeug sich auf der neu ermittelten Trajektorie bewegt.

Alternativ ist nach einer zweiten Variante vorgesehen, dass die Fahrzeugsteuerung den Fahrantrieb so steuert, dass das Transportfahrzeug sich auf einer Trajektorie mit vorgegebenen Trajektorie-Soll-Positionen von einem Trajektorieanfangspunkt zu einem Trajektorieendpunkt bewegt, und dass während der Bewegung des Fahrzeugs auf der Trajektorie die Beschleunigung des Transportfahrzeuges zur Positionsveränderung des Ladegutes durchgeführt wird, wodurch die Fahrzeug-Ist-Position von der Trajektorie-Soll-Position abweicht, und dass nach Abschluss der Beschleunigung des Transportfahrzeuges die Fahrzeugsteuerung einen relativen Fahrzeug-Positionskorrekturvektor ermittelt, der die Differenz zwischen der aktuellen Fahrzeug-Ist-Position und der aktuellen Trajektorie-Soll-Position reduziert und gleichzeitig nicht zu einer Positionsveränderung des Ladegutes führt, und den Fahrantrieb so steuert, dass sich das Transportfahrzeug unter Nutzung des ermittelten relativen Fahrzeug-Positionskorrekturvektors der Trajektorie-Soll-Position annähert und sich nach Reduktion der Differenz zwischen der Fahrzeug-Ist-Position und der Trajektorie-Soll-Position weiter auf der Trajektorie bewegt.

Die Erfindung betrifft auch ein Fahrerloses Transportfahrzeug zur Durchführung des Verfahrens mit einer mit dem Transportfahrzeug verbundenen Detektionseinrichtung, wobei das Transportfahrzeug eine Ladegutaufnahme, die auf einem Fahrwerk mit Fahrantrieb angeordnet ist, und eine Fahrzeugsteuerung aufweist.

Vor allem wenn die Ladegut-Ist-Position exakt erfasst werden soll bzw. muss, ist bevorzugt vorgesehen, dass die Detektionseinrichtung eine Kamera ist.

Dabei ist die Kamera vorteilhaft unterhalb eines transparenten Bodenbereiches der Ladegutaufnahme angeordnet. Zusätzlich kann die Kamera neben Positionsinformationen des Ladegutes auch optische Identifikationsmerkmale des Ladegutes, wie z.B. Barcodes oder QR-Codes, erfassen.

Alternativ kann auch vorgesehen sein, dass die Detektionseinrichtung Lichtsensoren aufweist, welche den Rand eines Ladegut-Soll-Bereiches auf der Ladegutaufnahme überwachen. Diese Lösung kommt vor allem dann in Betracht, wenn keine exakte Positionsbestimmung erforderlich ist. So kann es auf der Ladegutaufnahme einen Bereich geben, innerhalb dessen sich Ladegut befinden darf. Liegt es dort, ist es nicht korrekturbedürftig. Liegt es wenigstens teilweise außerhalb des Bereiches, ist es korrekturbedürftig. Das wird festgestellt, indem der Außenrand des Bereiches in bestimmten Abständen von unten durch kleine Löcher mit Lichtsensoren überwacht wird. Erkennt mindestens ein Lichtsensor das Ladegut, ist eine Korrektur nötig. Der Ladegut-Positionskorrekturvektor ist dann abhängig von der Anzahl der akut das Ladegut erkennenden Sensoren sowie ihrer jeweiligen Position.

Als Variante kann das Transportfahrzeug wiederum von unten durch Löcher in der Ladegutaufnahme in einem definierten Muster, z.B. ein einfaches Raster, eine Mehrzahl von Lichtsensoren aufweisen. Das Raster sollte sinnvollerweise so dicht sein, dass immer mindestens ein Sensor das Ladegut erkennt. Abhängig von der Sensordichte (vergleichbar mit der Auflösung einer Kamera) kann in unterschiedlicher Genauigkeit jederzeit die Ist-Position des Ladegutes ermittelt werden, zudem bei größerer Anzahl Sensoren auch eine ungefähre Größe des Ladegutes.

Es ist auch möglich, dass die Detektionseinrichtung nicht optisch ausgebildet ist, sondern z.B. mit dieser die Schwerpunktlage des Ladegutes überwacht wird, indem mit geeigneten Sensoren ein unterschiedlicher Einfederungsweg der Federung der Räder des Transportfahrzeuges erfasst wird. Die Detektionseinrichtung kann auch Ultraschallsensoren oder induktive Sensoren (für die Erkennung metallischer Ladegüter) aufweisen.

Ferner betrifft die Erfindung auch ein Fahrerloses Transportsystem mit wenigstens einem Fahrerlosen Transportfahrzeug, das eine Ladegutaufnahme, die auf einem Fahrwerk mit Fahrantrieb angeordnet ist, und eine Fahrzeugsteuerung aufweist, und mit wenigstens einer mit der Steuerung verbundenen Detektionseinrichtung, die stationär und räumlich getrennt vom wenigstens einem Transportfahrzeug angeordnet ist. Die wenigstens eine Detektionseinrichtung ist dann bevorzugt eine Kamera.

Die Erfindung ist nachstehend anhand der Zeichnung beispielhaft näher erläutert. Diese zeigt in
- Fig. 1: eine schematische, perspektivische Darstellung eines zur Durchführung des Verfahrens geeigneten Fahrerlosen Transportfahrzeuges nach einer ersten Ausgestaltung,
- Fig. 2: eine Seitenansicht des Transportfahrzeuges nach Fig. 1,
- Fig. 3: eine Draufsicht auf das Transportfahrzeug nach Fig. 1 mit Ladegut in einer von der Ladegut-Soll-Position abweichenden Ladegut-Ist-Position,
- Fig. 4: eine ähnliche Darstellung wie Fig. 3 mit einem Ladegut-Positions-korrektu rvektor,
- Fig. 5: eine perspektivische Darstellung des Transportfahrzeuges nach Fig. 1 mit Ladegut in der Ladegut-Soll-Position,
- Fig. 6: eine perspektivische Darstellung eines Transportfahrzeuges nach einer zweiten Ausgestaltung mit einem Ladegut in einer von der Ladegut-Soll-Position abweichenden Ladegut-Ist-Position,
- Fig. 7: das Transportfahrzeug nach Fig. 6 mit Ladegut in der Ladegut-Soll-Position,
- Fig. 8: einen schematischen Verfahrensablauf mit einem Transportfahr-zeug nach Fig. 1,
- Fig. 9: eine perspektivische Darstellung eines Transportfahrzeuges nach einer dritten Ausgestaltung mit Ladegut in einer von der Ladegut-Soll-Position abweichenden Ladegut-Ist-Position,
- Fig. 10: eine Seitenansicht der Fig. 9,
- Fig. 11: das Transportfahrzeug nach Fig. 9 mit Ladegut in der Ladegut-Ist-Position,
- Fig. 12: eine schematische, perspektivische Darstellung des Transportfahr-zeuges nach Fig. 6 im Blickfeld einer externen Kamera als Detek-tionseinrichtung
- Fig. 13: das Transportfahrzeug nach Fig. 7 im Blickfeld der externen Kamera,
- Fig. 14: eine perspektivische, schematische Darstellung eines Transportfahrzeuges nach einer vierten Ausgestaltung mit einem Ladegut in einer von der Ladegut-Soll-Position abweichenden Ladegut-IstPosition,
- Fig. 15: das Transportfahrzeug nach Fig. 14 mit Ladegut in der LadegutSoll-Position,
- Fig. 16: eine perspektivische, schematische Darstellung eines Transport fahrzeuges nach einer fünften Ausgestaltung,
- Fig. 17: eine Seitenansicht der Fig. 16,
- Fig. 18 bis 20: einen Bewegungsablauf eines auf einer vorgegebenen Trajektorie befindlichen Transportfahrzeuges bis zur Beschleunigung
- Fig. 21 bis 22: einen Bewegungsablauf des Transportfahrzeuges nach der Beschleunigung in einer ersten Verfahrensausgestaltung und
- Fig. 23 bis 24: einen Bewegungsablauf des Transportfahrzeuges nach der Beschleunigung in einer zweiten Verfahrensausgestaltung.

Ein Fahrerloses Transportfahrzeug zur Durchführung des erfindungsgemäßen Verfahrens ist in den Figuren allgemein mit 1 bezeichnet. Das Transportfahrzeug 1 dient zum Transport von allgemein mit 2 bezeichnetem Ladegut und weist dazu eine flächige Ladegutaufnahme 3 auf, auf welcher sich das Ladegut 2 befindet. Die Ladegutaufnahme 3 besteht z.B. aus Metall oder Kunststoff, ihre Kontaktoberfläche zum Ladegut 2 ist bei den Ausführungsbeispielen eben. Das Transportfahrzeug 1 weist darüber hinaus ein allgemein mit 4 bezeichnetes Fahrwerk auf, an dessen Unterseite Fahrrollen bzw. Fahrräder 5 angeordnet sind.

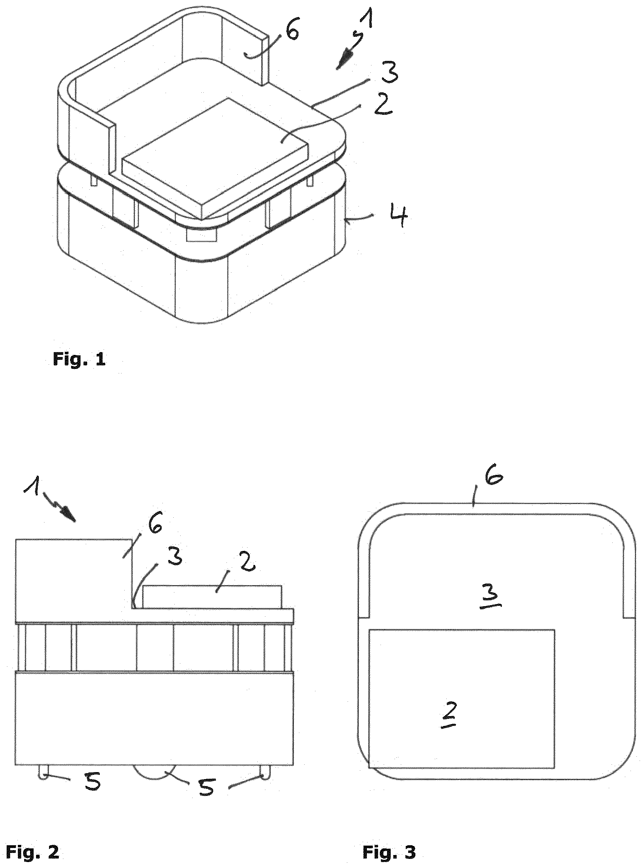

Bei den dargestellten Ausführungsbeispielen ist die Ladegutaufnahme 3 nicht direkt auf dem Fahrwerk 4 angeordnet, sondern zwischen der Oberseite des Fahrwerkes 4 und der Unterseite der Ladegutaufnahme 3 ist ein Zwischenkörper angeordnet. Zur Sicherung des Ladegutes 2 auf der Ladegutaufnahme 3 während des Transportes ist beim Transportfahrzeug nach Fig. 1 bis 5 eine Randbegrenzung 6 vorgesehen, die sich z.B. nur über einen Teilbereich des Umfanges der Ladegutaufnahme 3 erstreckt.

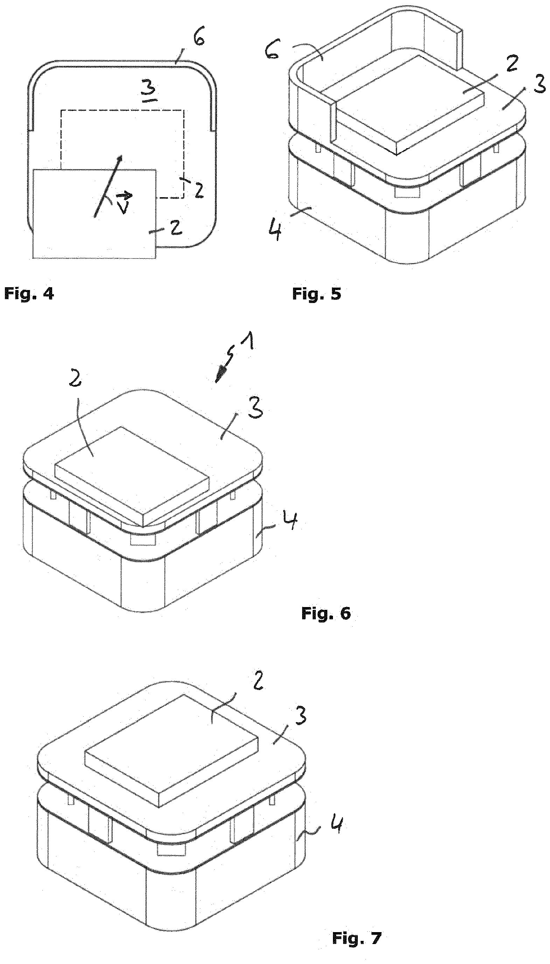

Das Transportfahrzeug 1 weist einen mit den Fahrrädern bzw. Fahrrollen 5 in Antriebsverbindung stehenden, nicht dargestellten Fahrantrieb auf, der von einer nicht dargestellten Steuerung steuerbar ist. Das Ladegut 2 befindet sich in den Darstellungen der Fig. 1 bis 3 in einer Ladegut-Ist-Position, die sich in einem Eckbereich der Ladegutaufnahme 3 befindet. Diese Ladegut-Ist-Position entspricht nicht der gewünschten Ladegut-Soll-Position, diese Position des Ladegutes 2 ist in Fig. 5 dargestellt.

Mit dem erfindungsgemäßen Verfahren soll deshalb die Position des Ladegutes 2 von der Ladegut-Ist-Position gemäß Fig. 1 bis 3 in die Ladegut-Soll-Position gemäß Fig. 5 verändert werden. Dazu ist eine nachfolgend näher beschriebene Detektionseinrichtung vorgesehen, die mit der Steuerung des Fahrerlosen Transportfahrzeuges verbunden ist und die die Ladegut-Ist-Position des Ladegutes 2 erfasst. Nach der Erfassung der Ladegut-Ist-Position ermittelt die Fahrzeugsteuerung aus der Ladegut-Ist-Position und der vorgegebenen Ladegut-Soll-Position einen Ladegut-Positionskorrekturvektor *̅v̅*̅. Dieser Ladegut-Positionskorrekturvektor ist in Fig. 4 dargestellt, und zwar erstreckt er sich vom Schwerpunkt des Ladegutes 2 in der Ladegut-Ist-Position zum Schwerpunkt des gestrichelt angedeuteten Ladegutes 2 in der Ladegut-Soll-Position.

Nach Ermittlung des Ladegut-Positionskorrekturvektors *̅v̅*̅ steuert die Fahrzeugsteuerung den Fahrantrieb des Transportfahrzeuges so, dass das Transportfahrzeug 1 im Wesentlichen in zum Ladegut-Positionskorrekturvektor *̅v̅*̅ entgegengesetzter Richtung beschleunigt wird, also im Sinne der Fig. 4 schräg nach links unten.

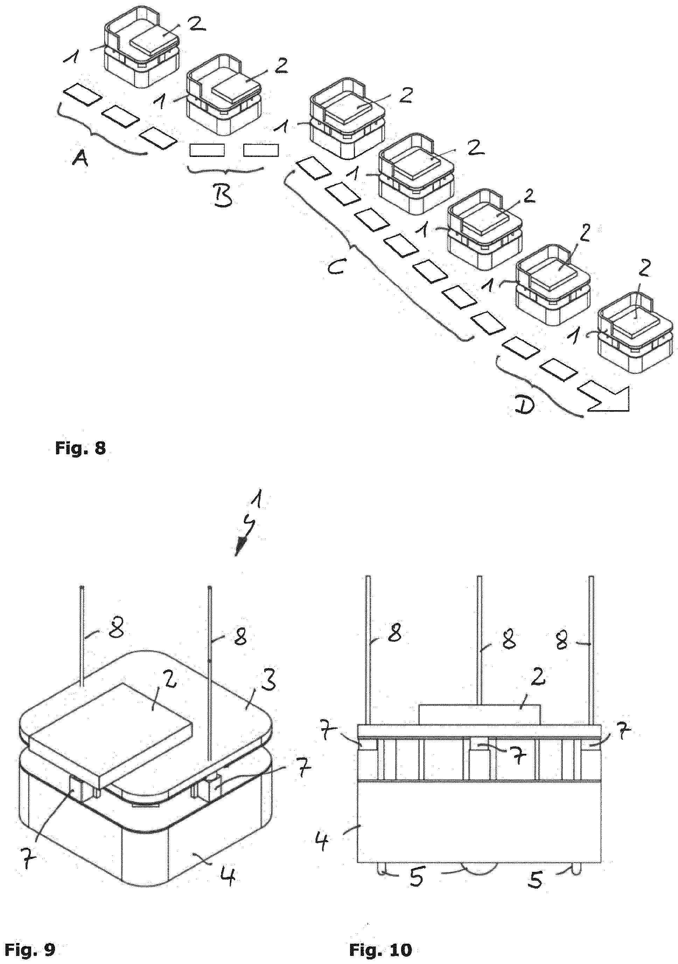

Der Bewegungsablauf des Transportfahrzeuges 1 ist in Fig. 8 dargestellt. Das Transportfahrzeug 1 bewegt sich zunächst in einem Bereich A z.B. geradlinig, wird dann in einen Bereich B entgegengesetzt zum Ladegut-Positionskorrekturvektor *̅v̅*̅ beschleunigt, worauf das Ladegut 2 auf der Ladegutaufnahme 3 nach Überwindung der Reibungskraft durch die Massenträgheitskraft in die Ladegut-Soll-Position rutscht. Anschließend bewegt sich das Transportfahrzeug 2 in einem Bereich C in Richtung des ursprünglichen Transportweges, um diesen in einem Bereich D wieder zu erreichen.

In Fig. 6 ist ein Transportfahrzeug 1 dargestellt, das sich von demjenigen nach den Fig. 1 bis 5 dadurch unterscheidet, dass die Ladegutaufnahme 3 keine Randbegrenzung aufweist. Das Ladegut 2 befindet sich wiederum in einer von der Ladegut-Soll-Position abweichenden Ladegut-Ist-Position und wird in der vorbeschriebenen Weise durch ein -oder mehrfache Beschleunigung in die Ladegut-Soll-Position gemäß Fig. 7 bewegt.

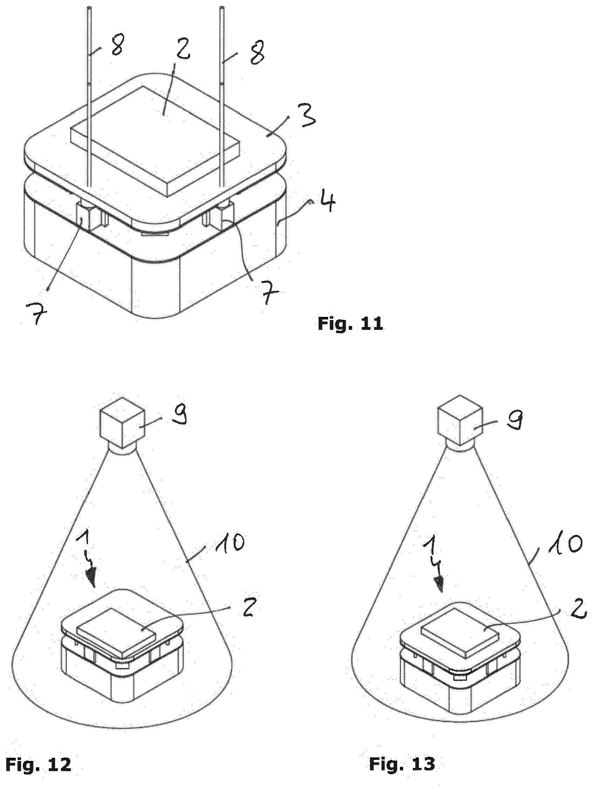

In den Fig. 9 bis 11 ist ein Transportfahrzeug 1 ohne Randbegrenzung dargestellt. An diesem Transportfahrzeug 1 ist eine mit der Fahrzeugsteuerung verbundene Detektionseinrichtung vorgesehen, die z.B. Lichtsensoren 7 aufweist. Diese Lichtsensoren 7 sind unterhalb der Ladegutaufnahme 3 angeordnet und können durch Öffnungen in der Ladegutaufnahme 3 Lichtstrahlen 8 vertikal nach oben abgeben. Die Lichtsensoren 7 sind so angeordnet, dass sie den Rand eines Ladegut-Soll-Bereiches auf der Ladegutaufnahme 3 überwachen. In Fig. 9 ist das Ladegut 2 so positioniert, dass die Lichtstrahlen des vorderen Lichtsensors 7 auf das Ladegut 2 treffen, so dass von diesem Lichtsensor erkannt wird, dass sich das Ladegut 2 nicht im Ladegut-Soll-Bereich befindet und dementsprechend auf der Ladegutaufnahme 3 verschoben werden muss. Fig. 11 zeigt das Ladegut 2 in der Ladegut-Soll-Position, alle Lichtsensoren 7 können ohne Behinderung durch das Ladegut 2 Lichtstrahlen 8 abgeben, so dass festgestellt wird, dass sich das Ladegut 2 in der Ladegut-Soll-Position befindet.

In den Fig. 12 und 13 ist ein Fahrerloses Transportsystem zur Durchführung des Verfahrens mit einem Fahrerlosen Transportfahrzeug 1 und einer mit der Steuerung verbundenen, als Kamera 9 ausgebildeten Detektionseinrichtung dargestellt, die stationär und räumlich getrennt vom Transportfahrzeug 1 angeordnet ist, beispielsweise oberhalb des Fahrweges des Transportfahrzeuges 1. Der Erfassungsbereich der Kamera 9 ist durch einen schematisch angedeuteten Kegel 10 dargestellt.

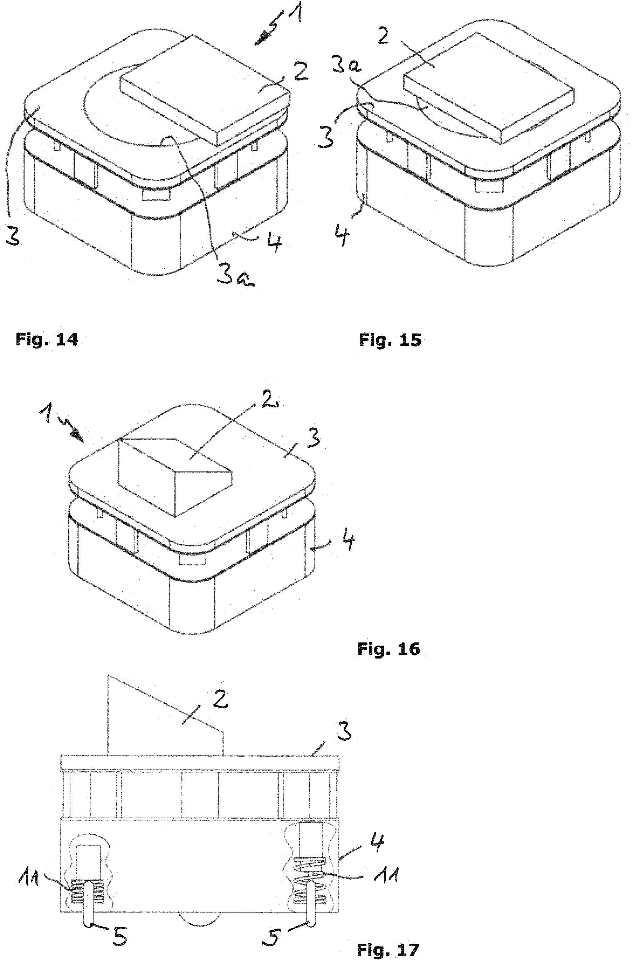

In den Fig. 14 und 15 ist ein Transportfahrzeug 1 dargestellt, in dessen Ladegutaufnahme 3 eine nicht dargestellte Kamera als Detektionseinrichtung integriert ist. Diese Kamera ist unterhalb eines wenigstens bereichsweise transparenten Bodenbereiches 3a der Ladegutaufnahme angeordnet.

In den Fig. 16 und 17 ist ein Transportfahrzeug 1 mit einem Ladegut 2 dargestellt, das sich in einer von der Ladegut-Soll-Position abweichenden Ladegut-Ist-Position befindet. Bei diesem Transportfahrzeug 1 sind Fahrräder 5 mit einer Federung 11 versehen, wobei mit Bezug auf Fig. 17 aufgrund der Anordnung des Ladegutes 2 außerhalb der Ladegut-Soll-Position (Schwerpunkt) der Federweg der beiden Federungen 11 unterschiedlich ist. In diesem Falle weist die Detektionseinrichtung nicht dargestellte Federwegsensoren auf, die mit der Steuerung verbunden sind. Erkennt die Steuerung, dass die Federwege der Federn 11 unterschiedlich sind, kann sie daraus die Schwerpunktlage des Ladegutes 2 und damit die Ladegut-Ist-Position ermitteln und die Positionsveränderung einleiten.

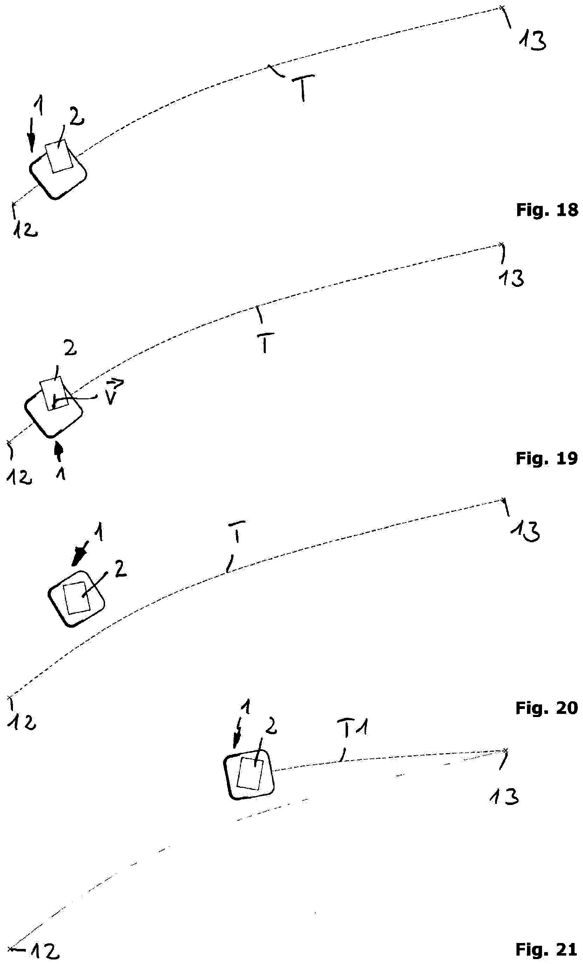

In den Fig. 18 bis 24 sind zwei Verfahrensabläufe dargestellt, bei denen die Fahrzeugsteuerung den Fahrantrieb des Transportfahrzeuges 1 so steuert, dass das Transportfahrzeug 1 sich auf einer Trajektorie mit vorgegebenen Trajektorie-Soll-Positionen von einem Trajektorieanfangspunkt 12 zu einem Trajektorieendpunkt 13 bewegt (Fig. 18).

In den Fig. 18 bis 20 sind die Ausgangspositionen für beide Verfahrensabläufe dargestellt, das Transportfahrzeug 1 folgt der gestrichelt angedeuteten Trajektorie T, das Transportfahrzeug 1 befindet sich auf der Trajektorie-Soll-Position, das Ladegut 2 hingegen befindet sich nicht in der Ladegut-Soll-Position.

Die Position des Ladegutes 2 muss deshalb im Sinne des Ladegut-Positionskorrekturvektors *̅v̅*̅ gemäß Fig. 19 korrigiert werden.

Zur Korrektur der Ladegutposition in die Ladegut-Ist-Position wird nun während der Bewegung des Transportfahrzeuges 1 auf der Trajektorie T das Transportfahrzeug 1 entgegengesetzt zum Ladegut-Positionskorrekturvektor *̅v̅*̅ beschleunigt. Anschließend weicht die Fahrzeug-ist-Position von der Trajektorie-Soll-Position ab, diese Situation ist in Fig. 20 dargestellt. Damit das Transportfahrzeug 1 den Zielpunkt, also den Trajektorieendpunkt 13, erreicht, sind zwei verschiedene Verfahrensabläufe vorgesehen, wobei der erste Verfahrensablauf in den Fig. 20 und 21 dargestellt ist:
Nach Abschluss der Beschleunigung des Transportfahrzeuges 1 (Fahrweg F) ermittelt die Fahrzeugsteuerung die verbleibende Trajektorie zum Trajektorieendpunkt 13 neu und steuert den Fahrantrieb so, dass das Transportfahrzeug 1 sich auf einer neu ermittelten Trajektorie T1 bewegt. Die alte Trajektorie wird deaktiviert.

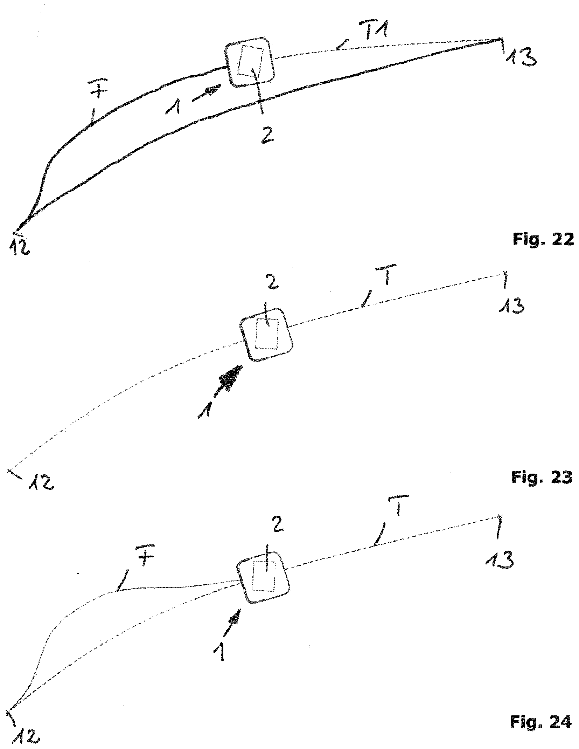

Alternativ ist gemäß Fig. 23 und 24 vorgesehen, dass nach Abschluss der Beschleunigung des Transportfahrzeuges 1 die Fahrzeugsteuerung einen relativen Fahrzeug-Positionskorrekturvektor ermittelt, der die Differenz zwischen der aktuellen Fahrzeug-Ist-Position und der aktuellen Trajektorie-Soll-Position reduziert und gleichzeitig nicht zu einer Positionsveränderung des Ladegutes führt und den Fahrantrieb so steuert, dass sich das Transportfahrzeug unter Nutzung des ermittelten relativen Fahrzeug-Positionskorrekturvektors der Trajektorie-Soll-Position annähert und sich nach Reduktion der Differenz zwischen der Fahrzeug-Ist-Position und der Trajektorie-Soll-Position weiter auf der (ursprünglichen) Trajektorie T bewegt. In diesem Falle wird somit keine neue Trajektorie ermittelt, das Fahrzeug bewegt sich bis zum Trajektorieendpunkt 13 wieder auf der ursprünglichen Trajektorie T.

### Bezugszeichenliste:

- 1: Transportfahrzeug
- 2: Ladegut
- 3: Ladegutaufnahme
- 3a: Transparenter Bodenbereich
- 4: Fahrwerk
- 5: Fahrräder
- 6: Randbegrenzung
- 7: Lichtsensor
- 8: Lichtstrahl
- 9: Kamera
- 10: Kegel
- 11: Federung
- 12: Trajektorieanfangspunkt
- 13: Trajektorieendpunkt

- T, T1: Trajektorie
- *̅v̅*̅: Ladegut-Positionskorrekturvektor
- A: Bereich
- B: Bereich
- C: Bereich
- D: Bereich
- F: Fahrweg

## Patentansprüche

1. Verfahren zur Positionsveränderung von auf einer Ladegutaufnahme (3) eines Fahrerlosen Transportfahrzeuges (1) befindlichem Ladegut (2), wobei der Fahrantrieb des Transportfahrzeuges von einer Fahrzeugsteuerung gesteuert wird, **dadurch gekennzeichnet,**
**dass** die Ladegut-Ist-Position von einer mit der Steuerung verbundenen Detektionseinrichtung erfasst wird und von der Fahrzeugsteuerung aus der Ladegut-Ist-Position ein Ladegut-Positionskorrekturvektor zu einer Ladegut-Soll-Position auf der Ladegutaufnahme (3) ermittelt wird und die Fahrzeugsteuerung den Fahrantrieb so steuert, dass das Transportfahrzeug (1) im Wesentlichen in zum Ladegut-Positionskorrekturvektor entgegengesetzter Richtung beschleunigt wird, damit das Ladegut (2) die Ladegut-Soll-Position auf der Ladegutaufnahme (3) erreicht.

2. Verfahren nach Anspruch 1,
**dadurch gekennzeichnet,**
**dass** die Ladegut-Ist-Position kontinuierlich von der Detektionseinrichtung erfasst und von der Fahrzeugsteuerung berücksichtigt wird.

3. Verfahren nach Anspruch 1 oder 2,
**dadurch gekennzeichnet,**
**dass** vor der Beschleunigung des Transportfahrzeuges (1) in im Wesentlichen zum Ladegut-Positionskorrekturvektor entgegengesetzter Richtung der Reibwert der Oberfläche der Ladegutaufnahme (3) verändert wird.

4. Verfahren nach Anspruch 1, 2 oder 3,
**dadurch gekennzeichnet,**
**dass** die Detektionseinrichtung stationär und räumlich getrennt vom Transportfahrzeug (1) angeordnet ist.

5. Verfahren nach Anspruch 1, 2 oder 3,
**dadurch gekennzeichnet,**
**dass** die Detektionseinrichtung mit dem Transportfahrzeug (1) verbunden ist.

6. Verfahren nach einem oder mehreren der Ansprüche 1 bis 5,
**dadurch gekennzeichnet,**
**dass** die Fahrzeugsteuerung den Fahrantrieb so steuert, dass das Transportfahrzeug (1) sich auf einer Trajektorie mit vorgegebenen Trajektorie-Soll-Positionen von einem Trajektorieanfangspunkt (12) zu einem Trajektorieendpunkt (13) bewegt, und dass während der Bewegung des Transportfahrzeuges (1) auf der Trajektorie die Beschleunigung des Transportfahrzeuges (1) zur Positionsveränderung des Ladegutes (2) durchgeführt wird, wodurch die Fahrzeug-Ist-Position von der Trajektorie-Soll-Position abweicht, und dass nach Abschluss der Beschleunigung des Transportfahrzeuges (1) die Fahrzeugsteuerung die verbleibende Trajektorie zum Trajektorieendpunkt (13) neu ermittelt und den Fahrantrieb so steuert, dass das Transportfahrzeug (1) sich auf der neu ermittelten Trajektorie bewegt.

7. Verfahren nach einem oder mehreren der Ansprüche 1 bis 5,
**dadurch gekennzeichnet,**
**dass** die Fahrzeugsteuerung den Fahrantrieb so steuert, dass das Transportfahrzeug (1) sich auf einer Trajektorie mit vorgegebenen Trajektorie-Soll-Positionen von einem Trajektorieanfangspunkt (12) zu einem Trajektorieendpunkt (13) bewegt, und dass während der Bewegung des Transportfahrzeuges (1) auf der Trajektorie die Beschleunigung des Transportfahrzeuges (1) zur Positionsveränderung des Ladegutes (2) durchgeführt wird, wodurch die Fahrzeug-Ist-Position von der Trajektorie-Soll-Position abweicht, und dass nach Abschluss der Beschleunigung des Transportfahrzeuges (1) die Fahrzeugsteuerung einen relativen Fahrzeug-Positionskorrekturvektor ermittelt, der die Differenz zwischen der aktuellen Fahrzeug-Ist-Position und der aktuellen Trajektorie-Soll-Position reduziert und gleichzeitig nicht zu einer Positionsveränderung des Ladegutes (2) führt, und den Fahrantrieb so steuert, dass sich das Transportfahrzeug (1) unter Nutzung des ermittelten relativen Fahrzeug-Positionskorrekturvektors der Trajektorie-Soll-Position annähert und sich nach Reduktion der Differenz zwischen der Fahrzeug-Ist-Position und der Trajektorie-Soll-Position weiter auf der Trajektorie bewegt.

8. Fahrerloses Transportfahrzeug zur Durchführung des Verfahrens nach Anspruch 5, 6 oder 7 mit einer Ladegutaufnahme (3), die auf einem Fahrwerk (4) mit Fahrantrieb angeordnet ist, und mit einer Fahrzeugsteuerung,
**dadurch gekennzeichnet,**
**dass** am Transportfahrzeug (1) eine mit der Fahrzeugsteuerung verbundene Detektionseinrichtung (7,9) vorgesehen ist.

9. Transportfahrzeug nach Anspruch 8,
**dadurch gekennzeichnet,**
**dass** die Detektionseinrichtung eine Kamera (9) ist.

10. Transportfahrzeug nach Anspruch 9,
**dadurch gekennzeichnet,**
**dass** die Kamera (9) unterhalb eines transparenten Bodenbereiches (3a) der Ladegutaufnahme (3) angeordnet ist.

11. Transportfahrzeug nach Anspruch 8,
**dadurch gekennzeichnet,**
**dass** die Detektionseinrichtung Lichtsensoren (7) aufweist, welche den Rand eines Ladegut-Soll-Bereiches auf der Ladegutaufnahme (3) überwachen.

12. Fahrerloses Transportsystem zur Durchführung des Verfahrens nach Anspruch 4 , 6 oder 7 mit wenigstens einem Fahrerlosen Transportfahrzeug (1), das eine Ladegutaufnahme (3), die auf einem Fahrwerk (4) mit Fahrantrieb angeordnet ist, und eine Fahrzeugsteuerung aufweist, und mit wenigstens einer mit der Steuerung verbundenen Detektionseinrichtung (7,9), die stationär und räumlich getrennt von dem wenigstens einen Transportfahrzeug (1) angeordnet ist.

## Claims

1. Method for changing the position of cargo (2) located on a cargo receptacle (3) of a driverless transport vehicle (1), wherein the traction drive of the transport vehicle is controlled by a vehicle controller,
**characterized in that**
the actual position of the cargo is detected by a detection apparatus connected to the controller and the vehicle controller determines from the actual position of the cargo a cargo positional corrective vector to a target position of the cargo on the cargo receptacle (3) and the vehicle controller controls the traction drive such that the transport vehicle (1) is accelerated substantially in the direction which is opposed to the cargo positional corrective vector, such that the cargo (2) reaches the target position for cargo on the cargo receptacle (3).

2. Method according to claim 1,
**characterized in that**
the actual position of the cargo is detected continuously by the detection apparatus and is taken into consideration by the vehicle controller.

3. Method according to claim 1 or 2,
**characterized in that**
prior to the acceleration of the transport vehicle (1) substantially in the direction which is opposed to the cargo positional corrective vector the friction coefficient of the surface of the cargo receptacle (3) is changed.

4. Method according to claim 1, 2 or 3,
**characterized in that**
the detection apparatus is arranged stationary and spatially separate from the transport vehicle (1).

5. Method according to claim 1, 2 or 3,
**characterized in that**
the detection apparatus is connected to the transport vehicle (1).

6. Method according to one or more of claims 1 to 5,
**characterized in that**
the vehicle controller controls the traction drive such that the transport vehicle (1) moves on a trajectory with predetermined trajectory target positions from a trajectory start point (12) to a trajectory end point (13), and that during the movement of the transport vehicle (1) on the trajectory the acceleration of the transport vehicle (1) for changing the position of the cargo (2) is carried out, as a result of which the actual position of the vehicle deviates from the trajectory target position, and that after the culmination of the acceleration of the transport vehicle (1) the vehicle controller determines anew the remaining trajectory to the trajectory end point (13) and controls the traction drive such that the transport vehicle (1) moves on the newly determined trajectory.

7. Method according to one or more of claims 1 to 5,
**characterized in that**
the vehicle controller controls the traction drive such that the transport vehicle (1) moves on a trajectory with predetermined trajectory target positions from a trajectory start point (12) to a trajectory end point (13), and that during the movement of the transport vehicle (1) on the trajectory the acceleration of the transport vehicle (1) for changing the position of the cargo (2) is carried out, as a result of which the actual position of the vehicle deviates from the trajectory target position, and that after the culmination of the acceleration of the transport vehicle (1) the vehicle controller determines a relative vehicle positional corrective vector, which reduces the difference between the current actual position of the vehicle and the current trajectory target position and at the same time does not result in a change in the position of the cargo (2), and controls the traction drive such that the transport vehicle (1) uses the determined relative vehicle positional corrective vector to approach the trajectory target position, and, after a reduction in the difference between the actual position of the vehicle and the trajectory target position, moves further on the trajectory.

8. Driverless transport vehicle for carrying out the method according to claim 5, 6 or 7 with a cargo receptacle (3), which is arranged on a chassis (4) with traction drive, and having a vehicle controller,
**characterized in that**
on the transport vehicle (1) is provided a detection apparatus (7, 9) connected to the vehicle controller.

9. Transport vehicle according to claim 8,
**characterized in that**
the detection apparatus is a camera (9).

10. Transport vehicle according to claim 9,
**characterized in that**
the camera (9) is arranged below a transparent floor region (3a) of the cargo receptacle (3).

11. Transport vehicle according to claim 8,
**characterized in that**
the detection apparatus has light sensors (7) which monitor the edge of a target cargo region on the cargo receptacle (3).

12. Driverless transport system for carrying out the method according to claim 4, 6 or 7 with at least one driverless transport vehicle (1), which has a cargo receptacle (3) which is arranged on a chassis (4) with traction drive and a vehicle controller, and having at least one detection apparatus (7, 9) connected to the controller, which is arranged stationary and spatially separate from the at least one transport vehicle (1).

## Revendications

1. Procédé de modification de position d'une cargaison (2) se trouvant sur un réceptacle de cargaison (3) d'un véhicule de transport sans conducteur (1), dans lequel l'entraînement du véhicule de transport est commandé par un dispositif de commande de véhicule,
**caractérisé en ce que**
la position réelle de cargaison est détectée par un appareil de détection connecté au dispositif de commande, et le dispositif de commande de véhicule détermine, à partir de la position réelle de cargaison, un vecteur de correction de position de cargaison par rapport à une position de consigne de cargaison sur le réceptacle de cargaison (3), et le dispositif de commande de véhicule commande l'entraînement de sorte que le véhicule de transport (1) soit accéléré sensiblement dans la direction opposée au vecteur de correction de position de cargaison, de sorte que la cargaison (2) atteigne la position de consigne de cargaison sur le réceptacle de cargaison (3).

2. Procédé selon la revendication 1,
**caractérisé en ce que**
la position réelle de cargaison est continuellement détectée par l'appareil de détection et prise en compte par le dispositif de commande de véhicule.

3. Procédé selon la revendication 1 ou 2,
**caractérisé en ce que**
avant l'accélération du véhicule de transport (1) dans une direction sensiblement opposée au vecteur de correction de position de cargaison, le coefficient de frottement de la surface du réceptacle de cargaison (3) est modifié.

4. Procédé selon la revendication 1, 2 ou 3,
**caractérisé en ce que**
l'appareil de détection est disposé de manière stationnaire et spatialement séparée du véhicule de transport (1).

5. Procédé selon la revendication 1, 2 ou 3,
**caractérisé en ce que**
l'appareil de détection est connecté au véhicule de transport (1).

6. Procédé selon une ou plusieurs des revendications 1 à 5,
**caractérisé en ce que**
le dispositif de commande de véhicule commande l'entraînement de sorte que le véhicule de transport (1) se déplace sur une trajectoire avec des positions de consigne de trajectoire prédéterminées depuis un point de début de trajectoire (12) jusqu'à un point de fin de trajectoire (13), et **en ce que**, pendant le déplacement du véhicule de transport (1) sur la trajectoire, l'accélération du véhicule de transport (1) est effectuée pour la modification de position de la cargaison (2), moyennant quoi la position réelle de véhicule s'écarte de la position de consigne de trajectoire, et **en ce qu'**après la fin de l'accélération du véhicule de transport (1), le dispositif de véhicule détermine à nouveau la trajectoire restante vers le point de fin de trajectoire (13) et commande l'entraînement de sorte que le véhicule de transport (1) se déplace sur la trajectoire nouvellement déterminée.

7. Procédé selon une ou plusieurs des revendications 1 à 5,
**caractérisé en ce que**
le dispositif de commande de véhicule commande l'entraînement de sorte que le véhicule de transport (1) se déplace sur une trajectoire avec des positions de consigne de trajectoire prédéterminées depuis un point de début de trajectoire (12) jusqu'à un point de fin de trajectoire (13), et **en ce que**, pendant le déplacement du véhicule de transport (1) sur la trajectoire, l'accélération du véhicule de transport (1) est effectuée pour la modification de position de la cargaison (2), moyennant quoi la position réelle de véhicule s'écarte de la position de consigne de trajectoire, et **en ce que**, après la fin de l'accélération du véhicule de transport (1), le dispositif de commande de véhicule détermine un vecteur de correction de position de véhicule relatif qui réduit la différence entre la position réelle de véhicule actuelle et la position de consigne de trajectoire actuelle et qui, en même temps, ne conduit pas à une modification de position de la cargaison (2), et commande l'entraînement de sorte que le véhicule de transport (1) se rapproche de la position de consigne de trajectoire en utilisant le vecteur de correction de position de véhicule relatif déterminé et continue à se déplacer sur la trajectoire après réduction de la différence entre la position réelle de véhicule et la position de consigne de trajectoire.

8. Véhicule de transport sans conducteur pour réaliser le procédé selon la revendication 5, 6 ou 7 avec un réceptacle de cargaison (3) qui est disposé sur un châssis (4) avec entraînement, et avec un dispositif de commande de véhicule,
**caractérisé en ce que**
un appareil de détection (7, 9) connecté au dispositif de commande de véhicule est prévu sur le véhicule de transport (1).

9. Véhicule de transport selon la revendication 8,
**caractérisé en ce que**
l'appareil de détection est une caméra (9).

10. Véhicule selon la revendication 9,
**caractérisé en ce que**
la caméra (9) est disposée sous une zone de fond transparente (3a) du réceptacle de cargaison (3).

11. Véhicule de transport selon la revendication 8,
**caractérisé en ce que**
l'appareil de détection présente des capteurs de lumière (7) qui surveillent le bord d'une zone de consigne de cargaison sur le réceptacle de cargaison (3).

12. Système de transport sans conducteur pour réaliser le procédé selon la revendication 4, 6 ou 7, avec au moins un véhicule de transport sans conducteur (1) qui présente un réceptacle de cargaison (3) qui est disposé sur un châssis (4) avec entraînement, et un dispositif de commande de véhicule, et avec au moins un appareil de détection (7, 9) connecté au dispositif de commande qui est disposé de manière stationnaire et spatialement séparée de l'au moins un véhicule de transport (1).
